# EUROPEAN PATENT APPLICATION

(11) **EP 0 874 018 A1**
(43) Date of publication of application: **28.10.1998**
(21) Application number: 98104547.9
(22) Date of filing: 13.03.1998
(51) Int. Cl.: C08J 7/12

(54) **Method and apparatus for oxidizing the internal surface of an extruded tubular during its extrusion**

(30) Priority: 24.04.1997 IT MI970978
(71) Applicant: Tecno Coating Engineering S.r.l., 28040 Marano Ticino, (NO) (IT)
(72) Inventor: Gini, Claudio, 28047 Oleggio (Novara) (IT)
(74) Representative: Savi, Alberto

(57) **Abstract**

The present invention consist of a method for boosting the internal surface tension of an extruded tubular by surface oxydation, characterised by the fact that an oxydizing fluid is injected into the tubular during the latter's extrusion phase.

Preferably, the oxydizing fluid is a mixture of air, oxygen and ozone, injected into the tubular as it exits from the drawplate.

## Description

This invention relates to the production sector for the coextrusion of tubulars for artificial casings and proposes a method and the relative apparatus to modify the internal surface tension of a multilayered extruded tubular for the purpose of enhancing its wettability and favouring the adhesion of the cased product.

More in particular, the method according to the invention envisions inflating a tubular with air by using an extrusion head conduit arranged in a direction coaxial with the forward motion of the tubular, a mixture of an oxydizing fluid, in particular of air, oxygen and ozone, capable of acting on the internal surface layer of the tubular to lend it the required surface active properties.

This solution allows boosting the tubular's internal surface tension so as to enhance its adhesion to the product designed to fill it. The method and apparatus according to the invention thus making it possible to produce a tubular having improved adherence characteristics, without in the least sacrificing the properties of flexibility and softness of the layers composing it.

In the foodstuffs sector and in particular in the sacked products industry, the traditional animal casings are being replaced by tubulars composed of multiple layers of different materials, so as to confer the product characteristics similar to those of a natural casing and to allow a favourable conservation of the products, from meats to cheeses or similar, destined to be sacked.

Based on the latest techniques, these tubulars are produced by extruding several different coaxial layers to form a single flexible tubular endowed with the necessary characteristics to act as a barrier against air and gases.

In order to ensure a better adherence of the tubular walls to the product inserted into it, the current state of the technology usually aims at producing an internal tubular layer by applying materials capable of ensuring these adherence properties, such as for instance some amorphous or non-amorphous polyamides. This system suffers however from certain shortcomings, as certain materials negatively affect the softness and flexibility of the tubular itself.

To eliminate this difficulty, certain techniques have been studied which include using electric discharges to modify the surface tension of the inner tubular wall, thus increasing its surface tension without affecting its characteristics of softness and flexibility, and enhancing its adherence to the product.

However, this system of exploiting the corona effect to oxydize the internal surface turns out to be complex, requires special high cost equipment and adds a further processing stage to the tubular's production cycle.

The purpose of this invention is to provide a method and the relative apparatus to allow increasing the internal surface tension of a tubular by oxydizing its surface without taking recourse to further processing stages and separate equipment, but simply by taking a direct action during the extrusion of the same.

For this purpose, the system envisions the tubular during its extrusion with an atmosphere of oxydizing fluids, in particular a mixture of air, oxygen and ozone, so as to achieve the required result in a quick and simple manner, directly during the tubular's production phase and without having recourse to special equipment, but simply by applying conduits designed to circulate the oxydizing fluid inside the extrusion heads normally employed for this type of production.

This and other characteristics will become more readily apparent from the detailed description supplied below, in the form of a non-limiting example, by reference to the single enclosed figure showing a cross section of an extrusion head for the production of a multilayered tubular by the method according to the invention.

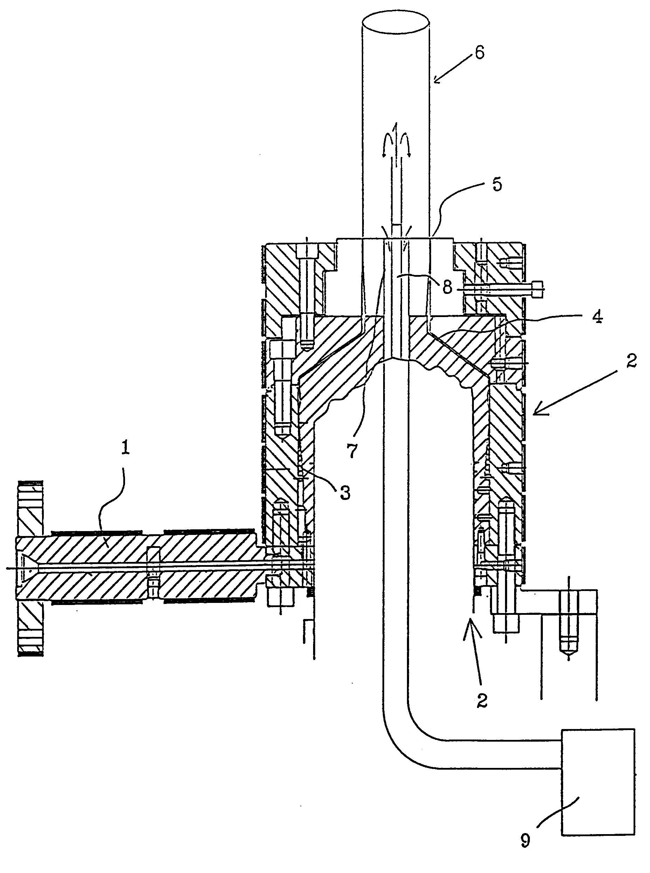

In accordance with the invention, the production of a multilayered tubular according to the invention utilises an assembly as shown in the figure, which comprises a row of injectors 1, only one of which is shown in the figure, directing the material toward an extrusion head identified in its overall form by 2, composed by a multiple number of coaxial cylindrical bodies each carrying on its surface a row of 3 channels through which the molten material moves to an extrusion chamber 4, from which it exits through an annular gap 5.

The materials used for this purpose may vary, while this specific case of tubulars for sacked products employs EVOH, various types of nylon, layers of adhesive material and polyolefines of various kinds, depending on the characteristics desired for the finished product.

These materials are coextruded, so as to achieve a tubular 6 having characteristics suitable for ensuring the conservation and protection of the mix to be sacked in its interior.

For example, nylon and EVOH are material capable of ensuring an adequate gas barrier, while polyolefins create where necessary an adequate water and vapor barrier while guaranteeing the tubular's softness, but not a capacity to adhere to the mix.

The characteristic of the invention is in the fact that it envisions a head equipped with some means of inflating the tubular from the inside, during the extrusion, by using a mixture of oxydizing fluids, in particular a mixture of air, oxygen and ozone in variable percentages, depending on the desired end result.

For this purpose a pair of preferably coaxial conduits 7 and 8 is provided, which cross the center of the drawplate to reach the internal area enclosed by the tubular being extruded.

The conduits 7 and 8 are connected to equipment units of a known type, capable of mixing the gases and maintaining their circulation inside the tubular, for example by pumping the mixture through the central conduit 8 and recovering it through the outer conduct 7.

Based on the method according to the invention, this mixture of oxydizing gases is injected into the tubular while being extruded, whereby the gases chemically react with the internal layer of material at high temperature, oxydizing it and increasing its surface tension without affecting its characteristics of softness and flexibility, so as to achieve a product capable of adhering to the sacked mix in an improved manner.

Various experiments have been performed and have allowed verifying that the tubulars constituted by various layers of materials in the following proportions:
A - barrier layer (from 15% to 5%);
B - adhesive or barrier layer (from 5% to 10%)
C - barrier layer (from 10% to 30%);
D - adhesive layer (from 5% to 15%)
E - internal polyolefine layer (from 75% to 30%)
provide satisfactory results by circulating inside the tubular, at the normal temperature found in this area during the extrusion, a mixture of air (10%), oxygen (30% - 40%) and ozone (50%-60%) for a retention period of 3-10 seconds.

The barrier and the adhesive materials used in the tests are those commonly employed in the sector.

The mixture of gases used may also vary and its composition may be easily determined experimentally, depending on the different results desired.

An expert of the trade may then also envision numerous changes and variants, which shall however all be deemed to fall within the scope of this invention.

## Claims

1. A method for boosting the internal surface tension of an extruded tubular by surface oxydation, characterised by the fact that an oxydizing fluid is injected into the tubular during the latter's extrusion phase.

2. A method according to claim 2 in which said oxydizing fluid is a mixture of air, oxygen and ozone.

3. A method according to claim 2, in which the fluid is a mixture comprising from 10% to 80% of air, 10% to 80% of oxygen and 10% to 80% of ozone.

4. A method according to claim 2, in which the fluid is a mixture comprising 10% of air, 30% to 40% of oxygen and 50% to 60% of ozone.

5. A method according to any of the claims from 2 to 4, characterised by the fact that said mixture of oxygen and ozone is injected into the tubular as it exits from the drawplate.

6. A method according to each of the foregoing claims, in which the said gas mixture is injected coaxially with the direction of the tubular's forward motion.

7. An apparatus for the production of a multilayered tubular of a type comprising an extrusion head equipped with multiple conduits connected to feeding devices for the materials to be extruded, leading to an extrusion chamber fitted with an annular gap from which the tubular exits, characterised by the fact that it provides means capable of inflating the interior of said tubular with a mixture of oxydising gases during the extrusion.

8. An apparatus according to claim 7, characterised by the fact that said means capable of injecting oxydising gases are constituted by coaxial conduits placed at the center of said extrusion gap.

9. An apparatus according to claim 8, characterised by the fact that said means capable of injecting the oxydizing gases comprise coaxial conduits fitted with radial nozzles.

10. An apparatus according to claim 7, in which the said tubulars are coaxial.
